# EUROPÄISCHE PATENTANMELDUNG

(11) **EP 1 254 705 A1**
(43) Veröffentlichungstag der Anmeldung: **06.11.2002**
(21) Anmeldenummer: 01810413.3
(22) Anmeldetag: 26.04.2001
(51) Int. Cl.: B01J 19/32

(54) **Kolonnenförmiger Reaktor mit Packung und Wärmeübertragendem Mittel**

(71) Anmelder: Sulzer Chemtech AG, 8404 Winterthur (CH)
(72) Erfinder: Schildhauer, Tilman Johannes, 5200 Brugg (CH); Newson, Esmond, Dr., 8200 Schaffhausen (CH); Mandic, Zdravkor., 8400 Winterthur (CH); Von Scala, Claudia, Dr., 8057 Zürich (CH)
(74) Vertreter: Sulzer Management AG

(57) **Zusammenfassung**

Der kolonnenförmige Reaktor (1) mit Packung (2') und wärmeübertragendem Mittel (11) ist zum Durchführen von endo- oder exothermen Reaktionen mit Fluiden als Reaktanden vorgesehen. Die Fluide werden innerhalb einer Reaktorwandung (10) in einer longitudinalen Richtung (20) von einem Eintrittsquerschnitt (201) der Packung zu einem Austrittsquerschnitt (202) gefördert. Das wärmeübertragende Mittel besteht aus auf der Reaktorwandung angeordneten Wärmeübertragungselementen (11') oder ist ein die Reaktorwandung umspülendes Wärmtransportmedium. Die Packung besteht aus einem Element (2) oder aus einer Mehrzahl von Elementen (2), die in longitudinaler Richtung angeordnete Packungsabschnitte bilden. Jedes Packungselement ist aus einer Mehrzahl von longitudinal ausgerichteten Lagen (21, 22) aufgebaut. Jede Lage enthält dicht angeordnete Kanäle (3). Die Kanäle benachbarter Lagen kreuzen sich. Randbereiche (212) der Packungselemente sind an der Reaktorwandung so ausgebildet, dass die Fluide in diesen Randbereichen von jeder Lage (22), aus der sie austreten, zu jeweils den benachbarten Lagen (21) übertreten können. Die Kanäle (3) weisen innerhalb eines Packungselements (2) seitliche Wände (30) auf, die für die Fluide undurchlässig sind oder die einen vernachlässigbar geringen Durchtritt zwischen benachbarten Kanälen zulassen.

## Beschreibung

Die Erfindung betrifft einen kolonnenförmigen Reaktor mit Packung und wärmeübertragendem Mittel gemäss Oberbegriff von Anspruch 1 und Verwendungen des Reaktors.

Aus der EP-A- 0 433 222 ist zur Behandlung von fluidförmigen Reaktanden ein Rohrreaktor bekannt, der zum Durchführen einer heterogenen Katalyse eine geordnete Packung enthält. Die Packung dieses katalytischen Reaktors weist eine Kreuzkanalstruktur auf, die zum Ausgleichen von Konzentrations- und Temperaturunterschieden in den durch die Packung strömenden Reaktanden vorgesehen ist. Offene Kreuzungsstellen zwischen benachbarten Strömungskanälen ermöglichen eine wechselseitige Beeinflussung von sich kreuzenden Teilströmen und bewirken damit ausgleichende Transportprozesse. Zwischen der Reaktorwandung, die mit wärmeübertragendem Mittel ausgestattet ist, und der Packung erlaubt ein Ringspalt einen Austritt der Reaktanden aus der Packung und einen anschliessenden Wiedereintritt in die Packung. Während des Aufenthalts im Ringspalt kann ein Wärmeaustausch zwischen den Reaktanden und dem wärmeübertragenden Mittel der Reaktorwandung stattfinden. Für einen optimalen Wärmeaustausch muss der Ringspalt einen hydraulischen Durchmesser haben, der mit dem hydraulischen Durchmesser der Strömungskanäle vergleichbar ist. Da ein relativ grosser Anteil der Reaktanden innerhalb der Packung zwischen den sich kreuzenden Kanälen hin- und herwechselt und dabei auf eine Strömung in longitudinaler Richtung (Hauptströmungsrichtung) beschränkt bleibt, ist die in den Ringspalt transportierbare Wärmemenge entsprechend beschränkt. Ausserdem ist eine Wärmeübertragung zwischen Reaktorwandung und Fluid mangels starker Turbulenzbildung in dem relativ breiten Ringspalt entsprechend gering ausgebildet.

Aufgabe der Erfindung ist es, einen kolonnenartigen Reaktor zu schaffen, der zum Durchführen beispielsweise eines exothermen Prozesses mit fluidförmigen Reaktanden geeignet ist und der eine Packung enthält, mit deren Hilfe sich eine Wärmeübertragung aus dem Innenbereich des Reaktors durch Wärmetransport zur und durch die Reaktorwandung realisieren lässt, wobei diese Wärmeübertragung effizienter als bei dem bekannten katalytischen Reaktor sein soll. Diese Aufgabe wird durch den im Anspruch 1 definierten Reaktor gelöst.

Der kolonnenförmige Reaktor mit Packung und wärmeübertragendem Mittel ist zum Durchführen von endo- oder exothermen Reaktionen mit Fluiden als Reaktanden vorgesehen. Die Fluide werden innerhalb einer Reaktorwandung in einer longitudinalen Richtung von einem Eintrittsquerschnitt der Packung zu einem Austrittsquerschnitt gefördert. Das wärmeübertragende Mittel besteht aus auf der Reaktorwandung angeordneten Wärmeübertragungselementen oder ist ein die Reaktorwandung umspülendes Wärmtransportmedium. Die Packung besteht aus einem Element oder aus einer Mehrzahl von Elementen, die in longitudinaler Richtung angeordnete Packungsabschnitte bilden. Jedes Packungselement ist aus einer Mehrzahl von longitudinal ausgerichteten Lagen aufgebaut. Jede Lage enthält dicht angeordnete Kanäle. Die Kanäle benachbarter Lagen kreuzen sich. Randbereiche der Packungselemente sind an der Reaktorwandung so ausgebildet, dass die Fluide in diesen Randbereichen von jeder Lage, aus der sie austreten, zu jeweils den benachbarten Lagen übertreten können. Die Kanäle weisen innerhalb eines Packungselements seitliche Wände auf, die für die Fluide undurchlässig sind oder die einen vernachlässigbar geringen Durchtritt zwischen benachbarten Kanälen zulassen.

Die abhängigen Ansprüche 2 bis 8 betreffen vorteilhafte Ausführungsformen des erfindungsgemässen Reaktors. Zwei Verwendungsmöglichkeiten für diesen Reaktor sind jeweils Gegenstand der Ansprüche 9 und 10.

Nachfolgend wird die Erfindung anhand der Zeichnungen erläutert. Es zeigen:
- Fig. 1: schematisch dargestellt, Packung und Reaktorwandung eines kolonnenartigen Reaktors,
- Fig. 2: die Struktur einer ersten Packung des erfindungsgemässen Reaktors,
- Fig. 3: ausschnittsweise eine Lage einer zweiten Packung,
- Fig. 4: Querschnittsprofile diverser Packungen von erfindungsgemässen Reaktoren,
- Fig. 5: ausschnittsweise eine Lage einer dritten Packung,
- Fig. 6: eine Seitenansicht einer Packungslage mit Kanälen, deren Querschnittsflächen variabel sind,
- Fig. 7: Längsschnitt durch eine Randregion eines erfindungsgemässen Reaktors und
- Fig. 8: ein zweiter derartiger Längsschnitt.

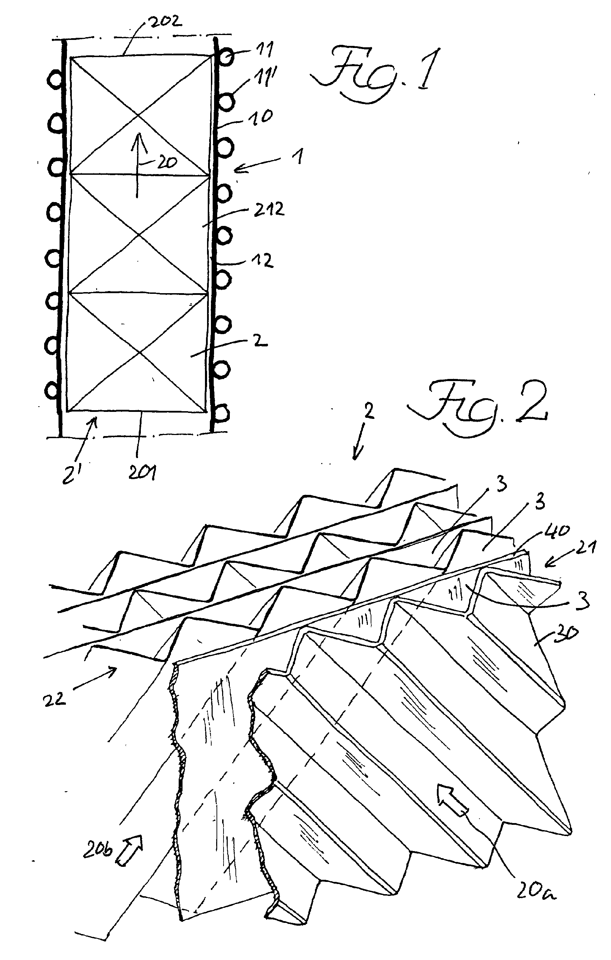

Der in Fig. 1 ausschnittsweise gezeigte kolonnenartige Reaktor 1 enthält eine Packung 2' mit drei Elementen 2, die übereinander angeordnete Packungsabschnitte bilden. Zwischen einer Reaktorwandung 10 und der Packung 2' befindet sich ein Ringspalt 12. Fluidförmige Reaktanden, die zum Durchführen von endo- oder exothermen Reaktionen vorgesehen sind, werden innerhalb der Reaktorwandung 10 in einer longitudinalen Richtung 20 von einem Eintrittsquerschnitt 201 der Packung 2' zu einem Austrittsquerschnitt 202 gefördert. Es sind wärmeübertragende Mittel 11 in Form von Wärmeübertragungselementen 11' auf der Reaktorwandung 10 angeordnet. Der Reaktor 1 kann auch über seine ganze Länge von einem Wärmeträgermedium umspült sein, wie es in Bündelreaktoren der Fall ist, in denen eine Vielzahl von Reaktoren 1 parallel nebeneinander angeordnet sind. Die durch die endo- oder exotherme Reaktion bewirkte Abkühlung bzw. Erwärmung der Reaktanden kann durch Zuführen bzw. Abführen von Wärme mittels der wärmeübertragenden Mittel 11 kompensiert werden.

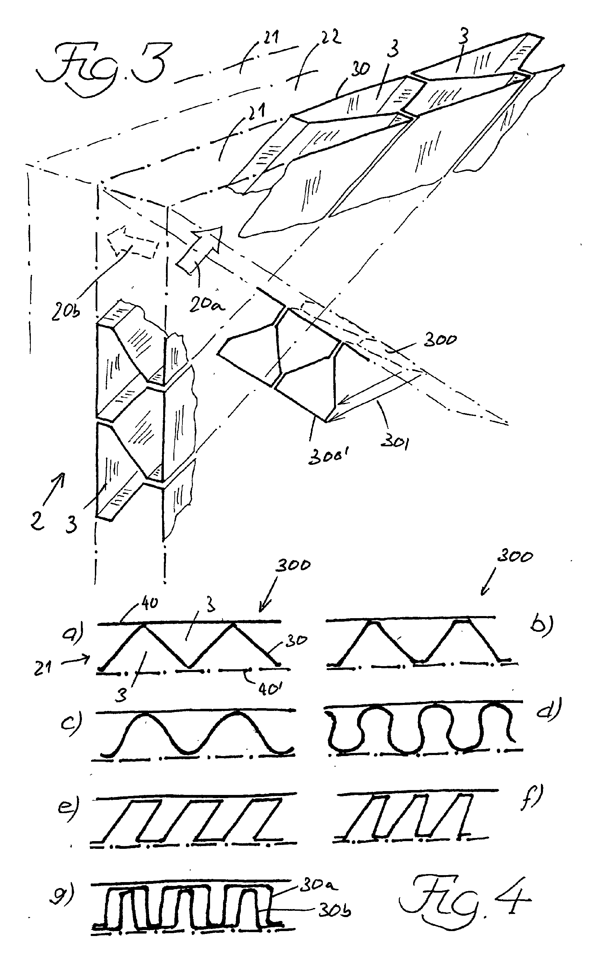

Jedes Packungselement 2 - siehe Figuren 2 und 3 - ist aus einer Mehrzahl von longitudinal ausgerichteten Lagen 21, 22 aufgebaut. Die Lagen 21, 22 benachbarter Packungselemente 2 sind mit Vorteil um 90° gegeneinander versetzt orientiert. Jede Lage enthält dicht angeordnete Kanäle 3, wobei die Kanäle 3 benachbarter Lagen 21 und 22 sich kreuzen. Die Kanäle 3 der beiden Beispiele sind geradlinig. Im Beispiel der Fig. 2 sind die Kanäle 3 einer Lage 21 oder 22 durch eine plissierte Materialfläche 30 und eine longitudinale, ebene Materialfläche 40 gebildet. (Eine Lage ist körperlich ausgebildet dargestellt, drei weitere sind schematisch dargestellt.) Im Beispiel der Fig. 3 sind die Kanäle 3 vollständig durch eine mäandrisch geformte Materialfläche 30 gebildet. Bei dieser Ausführungsform bilden die mäandrischen Schlaufen seitlich geschlossene Kanäle 3.

Randbereiche 212 der Packungselemente 2, siehe Fig. 1, sind an der Reaktorwandung 10 so ausgebildet, dass die Fluide in diesen Randbereichen 212 von jeder Lage 22, aus der sie austreten, zu jeweils den benachbarten Lagen 21 übertreten können. Dieser Übertritt erfolgt in der Regel durch den Ringspalt 12. Erfindungsgemäss weisen die Kanäle innerhalb eines Packungselements 2 seitliche Wände auf, die für die Fluide undurchlässig sind oder die einen vernachlässigbar geringen Durchtritt der Fluide zwischen benachbarten Kanälen 3 zulassen.

Die seitlich geschlossenen Kanäle 3 ergeben Strömungen 20a und 20b, die gegenüber der longitudinalen Richtung 20 geneigt sind. Diese Strömungen 20a, 20b führen in den Randbereichen 212 entweder in den Ringspalt 12 oder von diesem weg. Beim Übergang eines Fluids von einer Lage 22 zu einer benachbarten oder in der Regel zu zwei benachbarten Lagen 21 findet eine Aufteilung der austretenden Strömung 20b und Vereinigung mit Teilströmungen weiter entfernter Lagen statt. Dadurch ergibt sich eine Vermischung, die zu einer Homogenisierung von Temperatur und Konzentrationen beiträgt. Da die Kanäle 3 seitlich geschlossen sind, gelangt die gesamte Menge an behandelten Fluiden periodisch mit der Reaktorwandung in Kontakt, wo ein Wärmeaustausch stattfinden kann. Der Ringspalt 12 kann wesentlich enger als beim vorbekannten Reaktor ausgebildet sein, so dass beim Durchtritt der Fluide durch den Ringspalt 12 dank verstärkter Turbulenzbildung der Wärmeübergang verbessert ist.

In Fig. 3 ist ein Querschnitt durch die Lage 21 strichpunktiert angedeutet und das Querschnittsprofil 300 dieser Lage 21 in eine Ebene umgeklappt, in der es mit ausgezogenen Linien 300' dargestellt ist (die Umklappung ist durch Pfeile 301 symbolisiert). Aus darstellerischen Gründen ist angenommen, dass das umgeklappte Querschnittsprofil 300 in einer Ebene parallel zur Bildebene liegt, so dass das Profil 300 ohne Verzerrungen zu sehen ist. In Fig. 4 sind Beispiele a) bis g) von Querschnittsprofilen 300 diverser Packungselemente 2 abgebildet. Gerade ausgezogene Linien oder strichpunktierte Linien 40' sind Schnittlinien von ebenen Materialflächen 40, die an den Grenzen benachbarter Lagen 21 und 22 angeordnet sind. Die Materialflächen 30 sind plissiert, siehe Beispiel a), oder sonst wie geformt: beispielsweise b) symmetrisch trapezförmig, c) sinusförmig, d) mäandrisch, e) parallelogrammförmig oder f) asymmetrisch trapezförmig. Die Kanäle 3 können auch durch mehrere, beispielsweise zwei geformte und in einander geschachtelte Materialflächen 30a und 30b - siehe Beispiel g) - gebildet sein.

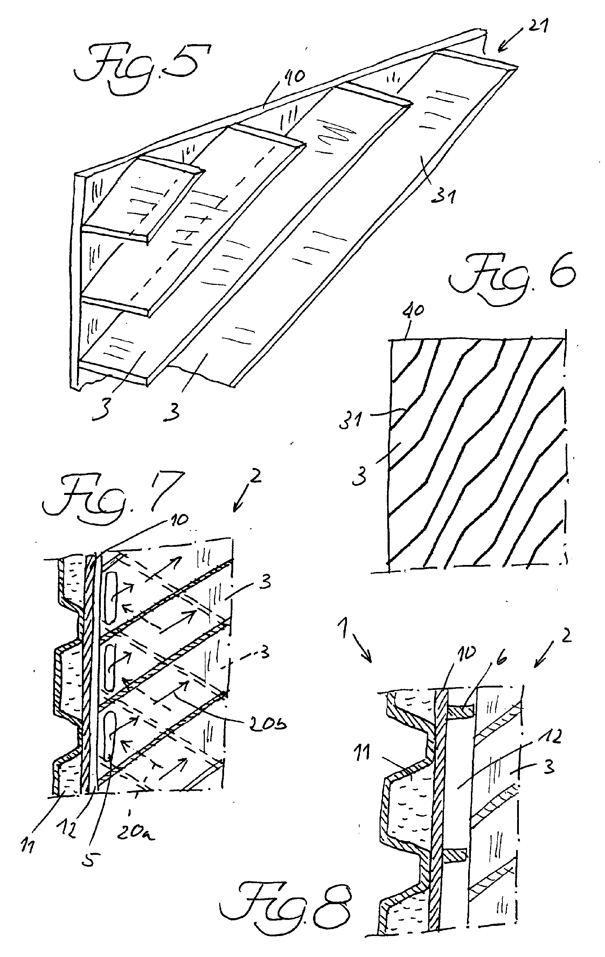

Die Kanäle 3 einer Lage 21 sind im Ausführungsbeispiel der Fig. 5 durch eine longitudinale Materialfläche 40 und eine Vielzahl von Materialstreifen 31 zusammengesetzt. Eine solche Konstruktion ermöglicht es auf einfache Weise, gekrümmte Kanäle herzustellen. Die Materialstreifen 31 können so geformt sein, dass die Kanäle 3 variable Querschnittsflächen aufweisen, siehe Fig. 6.

Der Packungsquerschnitt kann den Reaktorquerschnitt praktisch vollständig füllen. In diesem Fall kann es vorteilhaft sein, wenn wie in Fig. 7 gezeigt, die Kanäle 3 an der Reaktorwandung 10 jeweils bei ihrem Eingang bzw. Ausgang seitliche Durchbrüche 5 aufweisen, die für einen transversalen Durchtritt der Fluide in benachbarte Lagen vorgesehen sind. Bei diesem Durchtritt wird aus einer zur Rohrwandung 10 hin gerichteten Strömung 20a eine von der Rohrwandung 10 weg gerichtete Strömung 20b. Durchbrüche 5 ermöglichen es, die Packungselemente 2 so auszubilden, dass sie die Innenseite der Rohrwandung 10 berühren.

Das Ausführungsbeispiel der Fig. 8 zeigt Randbereiche des Reaktors 1 mit auf der Reaktorwandung 10 angebrachten Rippen 6. Es können auch andere transversal ausgerichtete Strukturelemente 6 auf der Rohrwandung 10 vorgesehen sein. Durch solche Strukturelemente 6 wird im Ringspalt 12 eine Strömung der Fluide in longitudinaler Richtung 20 behindert. Mit den Rippen 6 kann zusätzlich der Wärmeübergang zur Reaktorwandung 10 verbessert werden.

Die Richtung der Kanäle 3 einer Lage (oder eine mittlere Kanalrichtung im Beispiel der Fig. 6) schliesst mit der longitudinalen Richtung 20 einen Winkel ein, der grösser als 20° und kleiner als 80° ist. Vorzugsweise ist dieser Neigungswinkel grösser als 40° und kleiner als 60°. Je grösser der Neigungswinkel ist, desto öfter finden Kontakte der strömenden Fluide mit der Rohrwandung 10 statt und desto kleinere Differenzen zwischen maximalen und minimalen Temperaturen in den reagierenden Fluiden ergeben sich aufgrund des Wärmetausches an der Rohrwandung 10.

Die inneren Oberflächen der Kanäle 3 eines katalytischen Reaktors 1 weisen zumindest teilweise Beschichtungen auf, die aus katalytisch wirksamen Stoffen bestehen oder die Träger von katalytisch wirksamen Stoffen sind (vergleiche dazu die Beispiele, die in der oben genannten EP-A- 0 433 222 angegeben sind).

Es ist auch eine Verwendung des erfindungsgemässen Reaktors 1 möglich, bei der eine homogene Katalyse mit einem in der Fluidströmung mitgeführten Katalysator durchgeführt wird. Die Packung 2' kann frei von Beschichtungen sein. Der erfindungsgemässe Reaktor 1 ist auch für Reaktionen verwendbar, die ohne eine Katalyse erfolgen.

Es wurden Versuche durchgeführt, bei denen ein Wärmeübergang in einem rohrförmigen Reaktor zwischen Luft, die man durch eine Packung strömen liess, und der Reaktorwand gemessen wurde. Dabei wurde eine Versuchseinrichtung mit folgenden Merkmalen verwendet:
- Eine Packung 2' mit Packungselementen 2 gemäss Fig. 2.; kreisförmiger Querschnitt, Durchmesser: 18.8 mm; neun Elemente 2, Gesamtlänge: 450 mm; benachbarte Elemente 2 bezüglich der Orientierung der Lagen 21, 22 jeweils um 90° versetzt; Lagenbreite des Elements 2: 1.7 mm; Neigungswinkel der Kanäle 3: 45°.
- Von aussen elektrisch beheiztes Rohr, in dem die Packung 2' angeordnet ist; Innendurchmesser des Rohrs: 19 mm; Heiztemperatur: 120°C; äusserer Wärmeübergangskoeffizient Uₐ = 165 W/m²K.
- Luftmassenströme: 5 bis 100 Normalliter pro Minute.
- Temperaturmessung auf der zentralen Achse des Rohrs.

Es wurde ein globaler Wärmeübergangskoeffizient U bestimmt, wobei radiale Temperaturgradienten in der Packung 2' als vernachlässigbar angenommen wurden. Für den wandinnenseitigen Wärmeübergangs-Koeffizienten α (1/α = 1/U - 1/Uₐ) erhielt man in Abhängigkeit von der Massenstrombelastung g (kg/m²s) näherungsweise folgende Beziehung: α = 78.6 g^{0.53}.

Für eine Packung mit Kreuzkanalstruktur und ohne longitudinale Materialflächen 40, d.h. für eine Packung, wie sie für den vorbekannten Reaktor vorgesehen ist, wurden entsprechende Versuche mit folgendem Ergebnis durchgeführt: α = 60.2 g^{0.55}. Wie man sieht, ist der Wärmeübergangs-Koeffizient im erfindungsgemässen Reaktor wesentlich verbessert worden, nämlich um rund 30 % bei einer typischen Massenstrombelastung g von 1 kg/m²s.

## Patentansprüche

1. Kolonnenförmiger Reaktor (1) mit Packung (2') und wärmeübertragendem Mittel (11) zum Durchführen von endo- oder exothermen Reaktionen mit Fluiden als Reaktanden, die innerhalb einer Reaktorwandung (10) in einer longitudinalen Richtung (20) von einem Eintrittsquerschnitt (201) der Packung zu einem Austrittsquerschnitt (202) gefördert werden, wobei das wärmeübertragende Mittel aus auf der Reaktorwandung angeordneten Wärmeübertragungselementen (11') besteht oder ein die Reaktorwandung umspülendes Wärmtransportmedium ist, die Packung aus einem Element (2) besteht oder aus einer Mehrzahl von Elementen (2), die in longitudinaler Richtung angeordnete Packungsabschnitte bilden, jedes Packungselement aus einer Mehrzahl von longitudinal ausgerichteten Lagen (21, 22) aufgebaut ist, jede Lage dicht angeordnete Kanäle (3) enthält, die Kanäle benachbarter Lagen sich kreuzen und Randbereiche (212) der Packungselemente an der Reaktorwandung so ausgebildet sind, dass die Fluide in diesen Randbereichen von jeder Lage (22), aus der sie austreten, zu jeweils den benachbarten Lagen (21) übertreten können,
**dadurch gekennzeichnet, dass** die Kanäle (3) innerhalb eines Packungselements (2) seitliche Wände (30) aufweisen, die für die Fluide undurchlässig sind oder die einen vernachlässigbar geringen Durchtritt zwischen benachbarten Kanälen zulassen.

2. Reaktor nach Anspruch 1, **dadurch gekennzeichnet, dass** die Grenzen zwischen benachbarten Lagen durch longitudinale Materialflächen (40) gebildet sind.

3. Reaktor nach Anspruch 1 oder 2, **dadurch gekennzeichnet, dass** die Kanäle (3) geradlinig sind, oder dass die Kanäle einer Lage (21, 22) zumindest teilweise durch eine plissierte oder sonst wie umgeformte Materialfläche (30) gebildet sind.

4. Reaktor nach Anspruch 1 oder 2, **dadurch gekennzeichnet, dass** die Kanäle (3) einer Lage (21, 22) durch longitudinale Materialflächen (40) und eine Vielzahl von Materialstreifen (31) zusammengesetzt sind, wobei insbesondere die Materialstreifen so geformt sein können, dass die Kanäle variable Querschnittsflächen aufweisen.

5. Reaktor nach einem der Ansprüche 1 bis 4, **dadurch gekennzeichnet, dass** an der Rohrwandung (10) transversal ausgerichtete Strukturelemente, insbesondere auf der Reaktorwandung angebrachte Rippen (6) vorgesehen sind, die eine Strömung der Fluide in longitudinaler Richtung (20) behindern.

6. Reaktor nach einem der Ansprüche 1 bis 5, **dadurch gekennzeichnet, dass** der Packungsquerschnitt den Reaktorquerschnitt praktisch vollständig füllt und dass die Kanäle (3) an der Reaktorwandung (10) jeweils bei ihrem Eingang bzw. Ausgang seitliche Durchbrüche (5) aufweisen, die für einen transversalen Durchtritt der Fluide in benachbarte Lagen (21, 22) vorgesehen sind.

7. Reaktor nach einem der Ansprüche 1 bis 5, **dadurch gekennzeichnet, dass** die Kanalrichtung oder eine mittlere Kanalrichtung mit der longitudinalen Richtung (20) einen Winkel einschliesst, der grösser als 20° und kleiner als 80° ist, vorzugsweise grösser als 40° und kleiner als 60°.

8. Reaktor nach einem der Ansprüche 1 bis 7, **dadurch gekennzeichnet, dass** die inneren Oberflächen der Kanäle (3) zumindest teilweise Beschichtungen aufweisen, die aus katalytisch wirksamen Stoffen bestehen, oder die Träger von katalytisch wirksamen Stoffen sind.

9. Verwendung eines Reaktors (1) gemäss einem der Ansprüche 1 bis 8 zum Durchführen einer endo- oder exothermen Reaktion mit fluiden Reaktanden, wobei eine durch die Reaktion bewirkte Abkühlung bzw. Erwärmung der Reaktanden kompensiert wird durch Zuführen bzw. Abführen von Wärme mittels der wärmeübertragenden Mittel (11).

10. Verwendung eines Reaktors gemäss einem der Ansprüche 1 bis 8, **dadurch gekennzeichnet, dass** eine homogene Katalyse mit einem in der Fluidströmung mitgeführten Katalysator oder eine heterogene Katalyse mit einem auf der Packung (2') angeordneten Katalysator durchgeführt wird.
